# EUROPÄISCHE PATENTANMELDUNG

(11) **EP 3 078 581 A2**
(43) Veröffentlichungstag der Anmeldung: **12.10.2016**
(21) Anmeldenummer: 16159653.1
(22) Anmeldetag: 10.03.2016
(51) Int. Cl.: B62J 99/00, B62J 11/00, B62K 21/12

(54) **FAHRRADCOMPUTER**

(30) Priorität: 17.03.2015 DE 202015002018 U
(71) Anmelder: Canyon Bicycles GmbH, 56073 Koblenz (DE)
(72) Erfinder: Zeindl, Benedikt, 94508 Schöllnach (DE)
(74) Vertreter: dompatent von Kreisler Selting Werner - Partnerschaft von Patent- und Rechtsanwälten mbB

(57) **Zusammenfassung**

Ein Fahrradcomputer weist ein Gehäuse (10) auf, in dem eine Datenverarbeitungseinrichtung (14) sowie eine Sendeempfangseinrichtung (16) angeordnet sind. Der Computer weist ein Display (12) auf. Dieses ist in bevorzugter Ausführungsform zweiteilig ausgebildet, so dass ein geschlossener Bereich (18) und ein offener Bereich (20) vorgesehen ist. Der geschlossene Bereich (18) dient zur Darstellung fest vorgegebener Informationen wie der Geschwindigkeit, der Kurbelwellendrehzahl, des Pulses, der Höhe, der hieraus berechneten Daten etc. Der offene Bereich (20) dient zur Darstellung von von einer externen Datenverarbeitungseinrichtung wie einem Mobiltelefon übertragenen Informationen. Hierbei kann es sich um Navigationsdaten, Wetterdaten, Positionsdaten oder Darstellungen von App-Anwendungen handeln. Des Weiteren ist es bevorzugt, dass der Fahrradcomputer in eine Vorbaukappe (18) integriert ist, indem das Gehäuse (10) des Fahrradcomputers und die Vorbaukappe einstückig ausgebildet sind.

## Beschreibung

Die Erfindung betrifft einen Fahrradcomputer.

Bekannte Fahrradcomputer dienen zur Anzeige von benutzungsspezifischen Daten wie beispielsweise der Geschwindigkeit, der Kurbeldrehzahl, der aktuellen Höhe sowie hieraus berechneten Daten wie Durchschnittsgeschwindigkeit, Maximalgeschwindigkeit, maximale Höhe, minimale Höhe, Steigrate etc. Die Ermittlung derartiger Daten erfolgt über Sensoren. Hierbei handelt es sich beispielsweise um einen an einem Gabelbein der Vorderradgabel oder an einer Kettenstrebe angeordneten Sensor, der mit einem Magneten zusammenwirkt, der an der Speiche befestigt ist. Ein entsprechender oder mit diesem Sensor kombinierter Sensor kann an einer Kettenstrebe zur Detektion der Kurbeldrehzahl vorgesehen sein. Ein weiterer Sensor zu Höhenmessung kann beispielsweise als barometrischer Höhenmesser ausgebildet und insbesondere innerhalbe des Gehäuses des Fahrradcomputers angeordnet sein. Des Weiteren ist es möglich über das Display des Fahrradcomputers benutzerspezifische Daten wie den Puls darzustellen. Hierzu ist es bekannt einen entsprechenden Sensor beispielsweise mittels eines Brustbandes am Körper des Benutzers anzuordnen. Innerhalb des Gehäuses des Fahrradcomputers ist eine Datenverarbeitungseinrichtung angeordnet. Mit dieser ist eine ebenfalls in dem Gehäuse angeordnete Empfangseinrichtung verbunden. Die Empfangseinrichtung dient zum insbesondere drahtlosen Empfangen von Daten von an dem Fahrrad und/oder am Benutzer angeordneten Sensoren. Ferner kann die Datenverarbeitungseinrichtung mit einem innerhalb des Gehäuses angeordneten Sensor, wie einem Höhensensor, verbunden sein. Die entsprechenden Informationen, die dargestellt werden sollen, können über eine Software vom Benutzer ausgewählt werden. Des Weiteren ist mit dem Gehäuse eine Halteeinrichtung verbunden zum Befestigen des Fahrradcomputers am Fahrradlenker, an dem ebenfalls eine Halteeinrichtung vorgesehen ist.

Aufgabe der Erfindung ist es einen Fahrradcomputer zu schaffen, der auf einfache Weise am Fahrrad, insbesondere im Bereich des Fahrradlenkers oder Lenkervorbaus angeordnet werden kann. Eine hiervon unabhängige Aufgabe besteht darin, die Funktionalität des Fahrradcomputers zu verbessern.

Die Lösung der Aufgabe betreffend die Anordnung des Fahrradcomputers erfolgt durch die Merkmale des Anspruch 1 oder 3. Die Lösung der Aufgabe betreffend die Verbesserung der Funktionalität des Fahrradcomputers erfolgt durch die Merkmale des Anspruchs 6.

Bei einer ersten bevorzugten Ausführungsform ist die Halteeinrichtung des Fahrradcomputers derart ausgebildet, dass sie zur Befestigung an einer Vorbaukappe ausgebildet ist. Die Vorbaukappe dient zur Fixierung des Lenkers am Lenkervorbau. Üblicherweise weist die Vorbaukappe einen im Wesentlichen halbringförmigen Querschnitt auf, der vier Ansätze aufweist, um mit Hilfe von vier Befestigungsschrauben die Vorbaukappe an einer komplementär ausgebildeten Halteeinrichtung des Vorbaus zu befestigen und den Fahrradlenker hierdurch zu fixieren. Durch die erfindungsgemäße Ausgestaltung der Halteeinrichtung derart, dass sie zur Befestigung an einer Vorbaukappe ausgebildet ist, ist eine gesonderte beispielsweise am Lenker oder Vorbau anzuordnende Halteeinrichtung, die mit der Halteeinrichtung des Fahrradcomputers zusammenwirkt, nicht mehr erforderlich.

In einer bevorzugten Weiterbildung dieser Ausführungsform weist die Halteeinrichtung mindestens einen, insbesondere zwei Ansätze auf. Der mindestens eine, insbesondere beide Ansätze weisen jeweils eine Öffnung zum Hindurchführen einer Befestigungsschraube für die Vorbaukappe auf. Mit dieser bevorzugten Ausführungsform erfolgt das Befestigen des Fahrradcomputers mittels einer oder zwei Befestigungsschrauben, die gleichzeitig zur Fixierung der Vorbaukappe und damit des Lenkers dienen. Die insbesondere beiden oberen Befestigungsschrauben der Vorbaukappe weisen erfindungsgemäß somit eine Doppelfunktion auf, indem sie einerseits die Vorbaukappe halten und damit den Lenker fixieren und andererseits den Fahrradcomputer halten. Diese Ausführungsform ist insbesondere zum Nachrüsten geeignet, wobei es allenfalls erforderlich ist, etwas längere Befestigungsschrauben vorzusehen.

Ausgehend von einer Oberseite des Displays des Fahrradcomputers ragt der eine, insbesondere die beiden Ansätze vorzugsweise nach oben. Hierdurch ist eine einfache Montage des Fahrradcomputers ermöglicht.

In montiertem Zustand ist der Fahrradcomputer vorzugsweise derart angeordnet, dass das Display waagerecht oder in Fahrtrichtung leicht steigend ausgerichtet ist.

Bei einer weiteren unabhängigen Ausführungsform ist das Gehäuse des Fahrradcomputers einstückig mit der Vorbaukappe ausgebildet. Die Vorbaukappe ist in der bevorzugten Ausführungsform somit Teil des Gehäuses. Eine gesonderte Halteeinrichtung muss an dem Gehäuse des Fahrradcomputers nicht vorgesehen sein. Dies hat den Vorteil, dass bei der Montage des Lenkers unmittelbar auch der Fahrradcomputer montiert wird. Dies hat insbesondere auch den Vorteil, dass durch die Montage des Fahrradcomputers die Gefahr des Diebstahls verringert ist.

Vorzugsweise erfolgt die Verbindung zwischen dem Gehäuse und der Vorbaukappe in einem im montierten Zustand der Vorbaukappe oberen Bereich der Vorbaukappe. Die Verbindung erfolgt somit vorzugsweise nahe der insbesondere beiden oberen Befestigungsschrauben der Vorbaukappe.

Bevorzugt ist es wiederum auch bei dieser Ausführungsform, dass das Display in montiertem Zustand im Wesentlichen waagerecht oder leicht steigend bezogen auf die Fahrtrichtung ausgerichtet ist, so dass das Display des Fahrradcomputers für den Fahrer gut sichtbar ist.

Eine weitere Erfindung besteht darin, die Funktionalität des Fahrradcomputers zu verbessern. Diese Erfindung ist unabhängig von der Befestigung des Fahrradcomputers, wobei es bevorzugt ist, dass der Fahrradcomputer entsprechend einer der beiden vorstehend beschriebenen Erfindungen ausgebildet ist. Ein derartiger Fahrradcomputer weist wiederum ein Gehäuse auf, in dem eine Datenverarbeitungseinrichtung sowie eine Empfangseinrichtung zum Empfang von Daten von an dem Fahrrad oder einem Benutzer angeordneten Sensoren angeordnet sind. Ferner ist mit dem Gehäuse ein Display zur Informationsdarstellung verbunden. Erfindungsgemäß weist das Display zwei Bereiche auf. Ein geschlossener Bereich dient zur Darstellung fest vorgegebener Informationen. Hierbei handelt es sich um die Informationen, die auch bei herkömmlichen bekannten Fahrradcomputern dargestellt werden, wie beispielsweise die Geschwindigkeit, die Kurbeldrehzahl, der Puls, die Höhe sowie hieraus berechnete Informationen wie Durchschnittsgeschwindigkeit, Maximalgeschwindigkeit, Steigrate, maximale Höhe etc. Der zweite, offene Bereich dient zur Darstellung von Informationen, die von einer externen Datenverarbeitungseinrichtung wie einem Mobiltelefon übertragen werden. Hierbei kann es sich beispielsweise um Informationen für die Navigation, Wetterinformationen oder auch Informationen, die beispielsweise über Apps durch die externe Datenverarbeitungseinrichtung berechnet werden. Derartige Informationen können beispielsweise bei einem Radrennen die eigene Position im Fahrerfeld und die Position von definierten Mitfahrern im Fahrerfeld, wie Teamkollegen, sein. Bei der externen Datenverarbeitungseinrichtung handelt es sich vorzugsweise um ein Mobiltelefon. Das Vorsehen eines derartigen offenen Bereichs hat den Vorteil, dass die hier darzustellenden Informationen sehr frei wählbar sind. Insbesondere kann die erheblich bessere Rechenleistung der externen Datenverarbeitungseinrichtung genutzt werden. Auch können die Eigenschaften dieser externen Datenverarbeitungseinrichtung wie beispielsweise eine mobile Internetverbindung, ein in die externe Datenverarbeitungseinrichtung integriertes GPS-Modul und dergleichen benutzt werden.

Zur Datenübermittlung an den Fahrradcomputer kann dieser eine Zusatzempfangseinrichtung aufweisen. Alternativ kann auch die vorhandene Empfangseinrichtung entsprechend ausgebildet sein, um auch zum Empfang von Daten von der externen Datenverarbeitungseinrichtung geeignet zu sein. Bevorzugt ist es hierbei, dass diese Empfangseinrichtung bzw. Zusatzempfangseinrichtung die Daten über Bluetooth empfängt.

Bevorzugt ist es ferner, dass die Größe der beiden Bereiche variabel ist. Hierbei kann die Größe der beiden Bereiche vom Benutzer beispielsweise variabel oder in vorgeschlagenen Größenschritten eingestellt werden. Auch ist eine dynamische Veränderung der Größe der Bereiche möglich. Dies ist beispielsweise bei der Anzeige von wichtigen Navigationsdaten zweckmäßig. Hierbei ist es möglich, dass das gesamte Display ausschließlich den offenen Bereich darstellt, sodass eine große Darstellung wichtiger Navigationsdaten möglich ist.

Des Weiteren ist es bevorzugt, dass der Fahrradcomputer auch eine Sendeeinrichtung aufweist. Mit Hilfe der Sendeeinrichtung können insbesondere für die am Fahrrad, am Benutzer oder im Fahrradcomputer selbst vorgesehenen Sensoren ermittelte Daten sowie auch berechnete Daten an die externe Datenverarbeitungseinrichtung übermittelt werden. Innerhalb der Verarbeitungseinrichtung des Fahrradcomputers oder der externen Datenverarbeitungseinrichtung können die Daten auch miteinander kombiniert beziehungsweise verknüpft und hieraus neue Informationen ermittelt werden.

Bei einer weiteren bevorzugten Ausführungsform können auf die vorstehende Weise auf unterschiedliche Art ermittelte Daten von der externen Datenverarbeitungs-Einrichtung auch über das Mobilfunknetz übertragen werden. Hierzu ist es besonders bevorzugt, dass dem Fahrradcomputer eine Fahrradidentifikation wie eine Identifikationsnummer bekannt ist. Diese kann unmittelbar im Bord-Computer hinterlegt sein oder von einem der am Fahrrad angeordneten bzw. in das Fahrrad integrierten Sensoren übermittelt werden. Dies hat den Vorteil, dass die ermittelten Daten eindeutig einem bestimmten Fahrrad zugeordnet werden können.

Eine derartige Datenübermittlung kann beispielsweise an den Fahrradhersteller erfolgen. Anhand der entsprechenden Datenauswertung kann der Fahrradhersteller beispielsweise die bevorzugte Nutzung entsprechender Fahrradtypen statistisch auswerten. Dies kann sodann in der Produktentwicklung berücksichtigt werden.

Des Weiteren ist es bevorzugt, dass mit Hilfe der in dem Fahrradcomputer integrierten Datenverarbeitungseinrichtung und/oder der externen Datenverarbeitungseinrichtung Wartungszyklen ermittelt werden.

Diese können beispielsweise lediglich abhängig von einer gewissen Kilometerleistung sein. Zusätzlich können von entsprechenden Algorithmen aber auch die gefahrenen Höhenmeter und ggf. sogar die Steigung berücksichtigt werden. Mit einem entsprechenden Algorithmus könnte beispielsweise berücksichtigt werden, dass die Kette und die Bremsbeläge in Abhängigkeit der gefahrenen Höhenmeter und der Steigung ggf. stärker beansprucht werden, so dass ein Service oder eine Wartung bereits bei einer geringeren Kilometerleistung zu empfehlen ist.

Insbesondere bei der Übermittlung von Wartungsempfehlungen ist es möglich, zusätzlich Daten zu übermitteln, die beispielsweise die fahrradspezifischen Bremsbeläge, die vorhandene Kette etc. betreffen. Dies ist möglich, sofern entsprechende Angaben einmal vom Benutzer oder bereits werksseitig eingegeben wurden. Des Weiteren ist es möglich, den Fahrer unmittelbar auf eine Internetseite zu leiten, auf der die für die Wartung erforderlichen Ersatzteile bestellt werden können. Zusätzlich können dem Fahrer hier beispielsweise Montage- oder Wartungsanleitungen über das Internet zur Verfügung gestellt werden.

Insbesondere ist es möglich, am Fahrrad einen Sensor zur Ermittlung eines Sturzes vorzusehen. Hierbei kann es sich beispielsweise um einen Sensor handeln, der die Erschütterung detektiert. Insbesondere wenn ein Fahrradfahrer alleine unterwegs ist, kann hierdurch die Sicherheit erheblich erhöht werden. Bei der Detektion eines Sturzes kann unmittelbar ein Notruf abgesetzt werden. Dies kann über die Datenverarbeitungseinrichtung oder unmittelbar über ein mitgeführtes Mobiltelefon bzw. die Sende- und Empfangseinrichtung selbst erfolgen. Hierbei ist es bevorzugt, dass unmittelbar auch GPS-Daten an die entsprechende Notrufzentrale übermittelt werden. Des Weiteren könnte von der Notrufzentrale automatisch ein Rückruf aktiviert werden, um den Fahrer zu kontaktieren und die gegebenenfalls erforderlichen Rettungsmaßnahmen einzuleiten.

Auf Basis der übermittelten Daten und gegebenenfalls im Datenverarbeitungssystem zusätzlich hinterlegter Daten, können Daten betreffend durchzuführender Wartungen und dergleichen an eine Datenausgabeeinrichtung wie einen PC oder das Mobiltelefon übermittelt werden. An diese werden vorzugsweise die üblichen Tachodaten, Statistiken, Trekkingdaten etc. übermittelt. Über das insbesondere mobile Datenausgabegerät können weiterhin Daten zur unmittelbaren Bestellung von Ersatzteilen, Montage- und Wartungsanleitungen und dergleichen zur Verfügung gestellt werden.

Besonders bevorzugt ist es, dass die Datenaufnahme und/oder die Datenverarbeitung und/oder die Datenübermittlung automatisch gestartet werden, sobald das Fahrrad bewegt wird. Über die vorhandenen Sensoren kann auf einfache Weise detektiert werden, dass das Fahrrad bewegt wird. Dies kann mit Hilfe des GPS-Moduls, des REED-Sensors, des Geschwindigkeitssensors und dergleichen erfolgen.

Nachstehend wird die Erfindung anhand bevorzugter Ausführungsformen unter Bezugnahme auf die anliegenden Zeichnungen näher erläutert.

Es zeigen:
- Fig. 1: eine schematische Seitenansicht einer ersten bevorzugten Ausführungsform eines separaten Fahrradcomputers,
- Fig. 2: eine schematische Draufsicht des in Fig. 1 dargestellten Fahrradcomputers und
- Fig. 3: eine schematische perspektivische Ansicht einer zweiten erfindungsgemäßen Ausführungsform eines integrierten Fahrradcomputers.

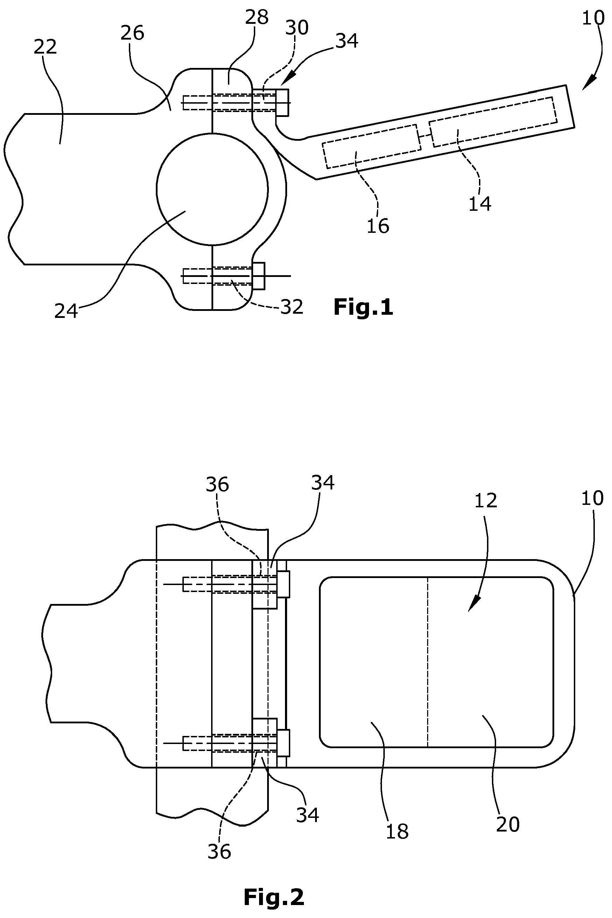

Der in den Fign. dargestellte separate und somit nachrüstbare Fahrradcomputer weist ein Gehäuse 10 auf. An einer Oberseite des Gehäuses (Fig. 2) ist ein Display 12 vorgesehen. Im dargestellten Ausführungsbeispiel sind im Inneren des Gehäuses eine Datenverarbeitungseinrichtung 14 sowie eine kombinierte Sende- und Empfangseinrichtung 16 angeordnet. Die Datenverarbeitungseinrichtung 14 ist mit der Empfangseinrichtung 16 verbunden. Die Sende- und Empfangseinrichtung 16 dient hierbei sowohl zur Kommunikation mit an dem Fahrrad oder am Benutzer angeordneten Sensoren als auch zur Kommunikation mit einer externen Datenverarbeitungseinrichtung wie einem Mobiltelefon. Ferner können an dem Gehäuse weitere Sensoren wie beispielsweise Drucksensoren angeordnet sein.

Das Display 12 weist einen geschlossenen Bereich 18 sowie einen offenen Bereich 20 zur Darstellung der entsprechenden über die Sensoren oder intern ermittelten Informationen in dem geschlossenen Bereich oder die mit Hilfe der externen Datenverarbeitungseinrichtung übermittelten Informationen in dem offen Bereich 20 auf. Der offene Bereich 20 dient somit als Zusatzbildschirm der externen Datenverarbeitungseinrichtung.

Die Befestigung der in den Fign. 1 und 2 dargestellten Ausführungsform des erfindungsgemäßen Fahrradcomputers erfolgt am Lenkervorbau 22. Der Lenkervorbau 22 weist eine Öffnung 24 auf, in der zur Montage der Lenker angeordnet ist. Das Fixieren des nicht dargestellten Lenkers in der Öffnung 24 erfolgt mittels einer mit dem Vorbau 22 einstückig ausgebildeten Halteeinrichtung 26, sowie einer dieser gegenüberliegenden Vorbaukappe 28. Die Halteeinrichtung 26 weist üblicherweise Bohrungen mit einem Innengewinde auf, in die üblicherweise vier Schrauben, zwei obere Schrauben 30 und zwei untere Schrauben 32 eingeschraubt werden. Hierdurch erfolgt ein klemmendes Halten des Fahrradlenkers in der Öffnung 24.

Zur Fixierung des Fahrradcomputers ist das Gehäuse 10 mit einer Halteeinrichtung verbunden. Diese bildet im dargestellten Ausführungsbeispiel zwei nach oben ragende Ansätze 34 aus. Jeder der beiden Ansätze 34 weist eine Öffnung oder Durchgangsbohrung 36 auf. Durch die beiden Durchgangsbohrungen 36 werden die oberen Schrauben 30, wie in Fig. 1 dargestellt, geführt, so dass das klemmende Halten des Fahrradlenkers gleichzeitig zur Fixierung des Fahrradcomputers dient.

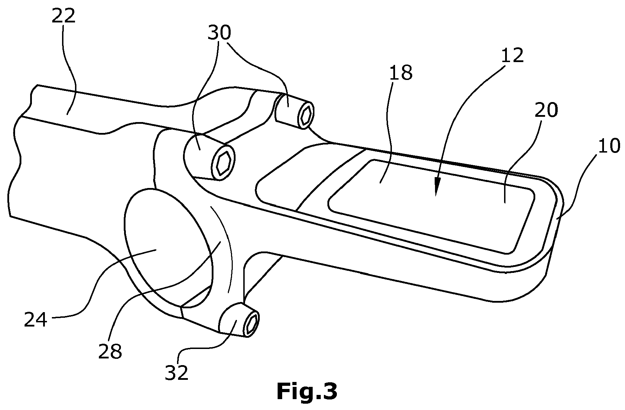

Bei der zweiten bevorzugten Ausführungsform (Fig. 3), bei der das Gehäuse des Fahrradcomputers einstückig mit der Vorbaukappe ausgebildet ist, sind ähnliche und identische Bauteile mit denselben Bezugszeichen gekennzeichnet.

Insbesondere weist das Display 12 wiederum einen geschlossenen Bereich 18 sowie einen offenen Bereich 20 auf. Innerhalb des Gehäuses 10 können die entsprechenden Bauteile insbesondere eine Datenverarbeitungseinrichtung 14 sowie eine Sende- und Empfangseinrichtung 16 angeordnet sein.

Der wesentliche Unterschied besteht darin, dass das Gehäuse 10 einstückig mit der Vorbaukappe 28 ausgebildet ist. Bei dem Fixieren des Lenkers in der Öffnung 24 mit Hilfe der Schrauben 32 erfolgt automatisch auch ein Fixieren des Fahrradcomputers.

Beide in den Zeichnungen dargestellten Ausführungsformen sind vorzugsweise mit einem Display ausgestattet, das einen geschlossenen Bereich 18 sowie einen offen Bereich 20 aufweist. Hierdurch können die beschriebenen Funktionen, insbesondere die Kommunikation mit der externen Datenverarbeitungseinrichtung wie einem Mobiltelefon auf einfache Weise realisiert werden.

## Patentansprüche

1. Fahrradcomputer mit
einem Gehäuse (10),
einer in dem Gehäuse (10) angeordneten Datenverarbeitungseinrichtung (14),
einer in dem Gehäuse (10) angeordneten Empfangseinrichtung (16) zum Empfangen von Daten von einem im oder am Fahrrad und/oder am Benutzer angeordneten Sensor,
einem mit dem Gehäuse (10) verbundenen Display (12) zur Informationsdarstellung,
**dadurch gekennzeichnet, dass**
das Gehäuse (10) einstückig mit einer Vorbaukappe (28) ausgebildet ist.

2. Fahrradcomputer nach Anspruch 1, **dadurch gekennzeichnet, dass** das Gehäuse (10) in einem in montiertem Zustand oberen Bereich der Vorbaukappe (28) mit dieser verbunden ist.

3. Fahrradcomputer nach Anspruch 1 oder 2, **dadurch gekennzeichnet, dass** das Display (12) in montiertem Zustand im Wesentlichen waagerecht ausgerichtet ist.

4. Fahrradcomputer mit
einem Gehäuse (10),
einer in dem Gehäuse (10) angeordneten Datenverarbeitungseinrichtung (14),
einer in dem Gehäuse (10) angeordneten Empfangseinrichtung (16) zum Empfangen von Daten von einem im oder am Fahrrad und/oder am Benutzer angeordneten Sensor,
einem mit dem Gehäuse (10) verbundenen Display (12) zur Informationsdarstellung und
einer mit dem Gehäuse (10) verbundenen Halteeinrichtung (34) zum Befestigen des Fahrradcomputers an einem Fahrrad,
**dadurch gekennzeichnet, dass**
die Halteeinrichtung (34) zur Befestigung an einer Vorbaukappe (28) ausgebildet ist.

5. Fahrradcomputer nach Anspruch 4, **dadurch gekennzeichnet, dass** die Halteeinrichtung mindestens einen eine Öffnung (36) aufweisenden Ansatz (34) zum Hindurchführen eines Befestigungsmittels (30), insbesondere einer Befestigungsschraube (30) für die Vorbaukappe (28), aufweist.

6. Fahrradcomputer mit
einem Gehäuse (10),
einer in dem Gehäuse (10) angeordneten Datenverarbeitungseinrichtung (14),
einer in dem Gehäuse (10) angeordneten Empfangseinrichtung (16) zum Empfangen von Daten von einem im oder am Fahrrad und/oder am Benutzer angeordneten Sensor,
einem mit dem Gehäuse (10) verbundenen Display (12) zur Informationsdarstellung,
**dadurch gekennzeichnet, dass**
das Display (12) einen geschlossenen Bereich (18) zur Darstellung fest vorgegebener Informationen und einen offenen Bereich (20) zur Darstellung von von einer externen Datenverarbeitungseinrichtung übertragenen Informationen aufweist.

7. Fahrradcomputer nach Anspruch 6, **dadurch gekennzeichnet, dass** eine Zusatzempfangseinrichtung (16) zum Empfangen von Daten von der externen Datenverarbeitungsvorrichtung vorgesehen ist.

8. Fahrradcomputer nach Anspruch 6 oder 7, **dadurch gekennzeichnet, dass** eine im Gehäuse (10) angeordnete Sendeeinrichtung zum Senden von Daten an die externe Datenverarbeitungseinrichtung vorgesehen ist.

9. Fahrradcomputer nach einem der Ansprüche 6 bis 8, **dadurch gekennzeichnet, dass** die Größe der Bereiche (18, 20) variabel ist.
